# EUROPEAN PATENT SPECIFICATION

(11) **EP 3 332 559 B1**
(45) Date of publication and mention of the grant of the patent: **02.01.2019**
(21) Application number: 16892936.2
(22) Date of filing: 28.10.2016
(51) Int. Cl.: H04L 5/00

(54) **ENABLING INTERFERENCE-AWARE CONFIGURATION OF AT LEAST ONE TRANSMISSION AND/OR INTERFERENCE SUPPRESSION IN A CELLULAR COMMUNICATION SYSTEM**
AKTIVIEREN EINER INTERFERENZ-BEWUSSTEN KONFIGURATION VON MINDESTENS EINER ÜBERTRAGUNG UND / ODER INTERFERENZUNTERDRÜCKUNG IN EINEM ZELLULAREN KOMMUNIKATIONSSYSTEM
PROCÉDÉ RENDANT POSSIBLE LA CONFIGURATION D'AU MOINS UNE SUPPRESSION DE TRANSMISSION ET / OU D'INTERFÉRENCE EN TENANT COMPTE DES INTERFÉRENCES DANS UN SYSTÈME DE COMMUNICATION CELLULAIRE

(43) Date of publication of application: 13.06.2018
(73) Proprietor: Telefonaktiebolaget LM Ericsson (PUBL), 164 83 Stockholm (SE)
(72) Inventor: CIRKIC, Mirsad, 58246 Linköping (SE); WIBERG, Niclas, 58597 Linköping (SE); RYDEN, Henrik, 58215 Linköping (SE); BERGLUND, Joel, 58333 Linköping (SE)
(74) Representative: Ericsson
(86) International application number: PCT/SE2016/051060
(87) International publication number: WO 2018/080363

(56) References cited:
- EP-A1- 2 849 527
- EP-A1- 2 981 143
- WO-A1-2009/123515
- WO-A1-2012/096604
- WO-A1-2013/110218
- WO-A1-2013/110218
- US-A1- 2013 225 217
- US-A1- 2013 294 268
- US-A1- 2013 294 268
- US-A1- 2016 198 486
- HUAWEI, HISILICON: 'Discussion in UE-to-UE interference mitigation schemes' 3GPP TSG RAN WG1; R1-1608831; MEETING #86BIS 10 October 2016, LISBON, PORTUGAL, XP051148885

## Description

### TECHNICAL FIELD

The proposed technology generally relates to cellular communication systems and ways to improve the interference situation in such systems. In particular, the proposed technology relates to a method of operating a User Equipment, UE, and a method of operating a network device, as well as a corresponding UE and network device, respectively, as well as a corresponding network node and computer programs and computer-program products and apparatuses.

### BACKGROUND

In wireless communication systems based on spectrum sharing techniques such as Time Division Duplex, TDD, where the downlink and the uplink are sharing the same spectrum, the downlink and uplink may be multiplexed in time. However, especially for cellular communication systems, the uplink part of some cells can occur during the downlink part of other cells which can result in interference between the users in the different cells.

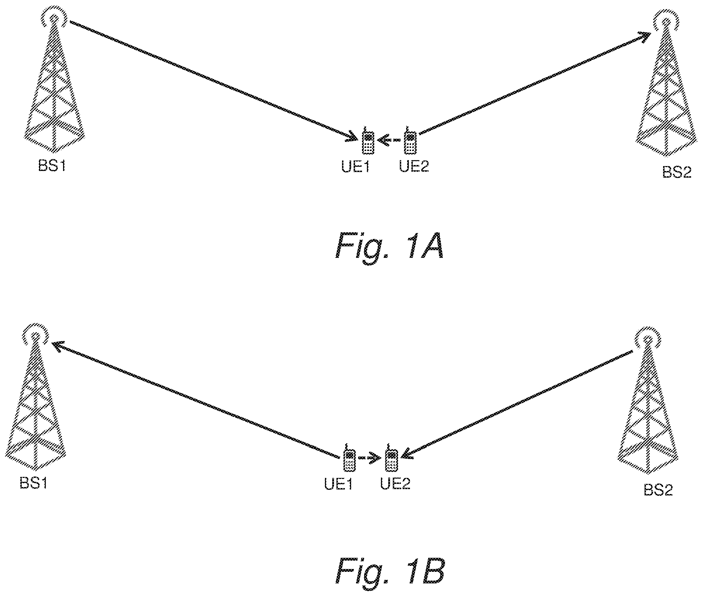

FIG. 1A and FIG. 1B are schematic diagrams illustrating examples of how an uplink transmission by one UE may interfere with and affect a downlink transmission to another UE. An example of interference from uplink to downlink is illustrated. The transmission from BS1 to UE1 is simultaneous with the transmission from UE2 to BS1. Some power from the UE2 will arrive at UE1, causing interference, leading to degraded throughput performance and in some cases even obstruction of essential communication procedures.

This interference is not known and can significantly affect the performance of users that are close to each other and belong to different cells.

EP 2 849 527 relates to systems and apparatuses for implementing methods that may include receiving, by enhanced user equipment (eUE), an assignment of Resource Blocks (RBs) from an eNodeB (eNB), wherein the eUE is configured to receive full duplex transmissions; for each assigned RB, measuring interference caused by uplink transmissions from one or more legacy UEs; and reporting, to the eNB, the measured interference. The present implementations may provide an eUE-based approach, an eUE and eNB interactive approach, an eUE baseband approach, and an eUE analog approach to reducing interference for full duplex enabled mobile devices.

US 2013/294268 concerns a method for mitigating interference in a wireless network that includes an eNodeB and/or a UE identifying interference. The eNodeB may identify the interfering TDD configurations based on a downlink signal of a neighboring eNodeB received during an uplink timeslot for a UE associated with the eNodeB. Likewise, the UE may identify an interfering UE based on an uplink signal received during a downlink timeslot for an eNodeB associated with the UE. The eNodeB performs interference management based at least in part on the identified interference.

There is thus a general need for improvements relating to the interference situation in such systems.

### SUMMARY

It is an object to provide a method of operating a User Equipment, UE, in a cellular communication system.

Another object is to provide a method of operating a network device in connection with a cellular communication system.

It is also an object to provide a User Equipment, UE, configured for operation in a cellular communication system.

Yet another object is to provide a network device configured for operation in connection with a cellular communication system.

Still another object is to provide a network node comprising such a network device.

A further object is to provide a computer program for enabling, when executed, operation of a User Equipment, UE.

It is also an object to provide a computer program for enabling, when executed, operation of a network device.

Another object is to provide a corresponding computer-program product.

Yet another object is to provide an apparatus for enabling operation of a User Equipment, UE.

Still another object is to provide an apparatus for enabling operation of a network device.

These and other objects are met by embodiments of the proposed technology.

According to a first aspect there is provided a method of operating a User Equipment, UE, in a cellular communication system. The method comprises:
- the UE, also referred to as a first UE, performing at least one measurement related to an uplink signal transmitted by a second UE to obtain measurement information representing so-called UE-to-UE interference between the first UE and the second UE; and
- the first UE sending a report including the information representing the UE-to-UE interference to the network to enable interference-aware configuration of at least one transmission and/or interference suppression in the cellular communication system.

In this way, measurement information representing so-called UE-to-UE interference between UEs can be obtained and reported to enable interference-aware configuration of at least one transmission and/or interference suppression in the cellular communication system.

According to a second aspect there is provided a method of operating a network device in connection with a cellular communication system. The method comprises:
- receiving a report including measurement information representing so-called UE-to-UE interference between a first UE and a second UE to enable interference-aware configuration of at least one transmission and/or interference suppression in the cellular communication system, wherein the measurement information is related to at least one measurement performed by the first UE of an uplink signal transmitted by the second UE.

According to a third aspect there is provided a User Equipment, UE, configured for operation in a cellular communication system. The UE, also referred to as a first UE, is configured to perform at least one measurement related to an uplink signal transmitted by a second UE to obtain measurement information representing so-called UE-to-UE interference between the first UE and the second UE. The first UE is also configured to send a report including the information representing the UE-to-UE interference to the network to enable interference-aware configuration of at least one transmission and/or interference suppression in the cellular communication system. According to a fourth aspect there is provided a network device configured for operation in connection with a cellular communication system. The network device is configured to receive a report including measurement information representing so-called UE-to-UE interference between a first UE and a second UE to enable interference-aware configuration of at least one transmission and/or interference suppression in the cellular communication system, wherein the measurement information is related to at least one measurement performed by the first UE of an uplink signal transmitted by the second UE.

According to a fifth aspect there is provided a network node comprising such a network device.

According to a sixth aspect there is provided a computer program for enabling, when executed, operation of a User Equipment, UE, also referred to as a first UE, in a cellular communication system. The computer program comprises instructions, which when executed by at least one processor, cause the at least one processor to:
- initiate at least one measurement related to an uplink signal transmitted by a second UE to obtain measurement information representing so-called UE-to-UE interference between the first UE and the second UE; and
- generate a report including the information representing the UE-to-UE interference for transmission to the network side to enable interference-aware configuration of at least one transmission and/or interference suppression in the cellular communication system.

According to a seventh aspect there is provided a computer program for enabling, when executed, operation of a network device in connection with a cellular communication system. The computer program comprises instructions, which when executed by at least one processor, cause the at least one processor to receive a report including measurement information representing so-called UE-to-UE interference between a first UE and a second UE to enable interference-aware configuration of at least one transmission and/or interference suppression in the cellular communication system. The measurement information is related to at least one measurement performed by the first UE of an uplink signal transmitted by the second UE.

According to an eighth aspect there is provided a computer-program product comprising a computer-readable medium having stored thereon a computer program according to the sixth or seventh aspect.

According to a ninth aspect there is provided an apparatus for enabling operation of a User Equipment, UE, also referred to as a first UE, in a cellular communication system. The apparatus comprises:
- an initiating module for initiating at least one measurement related to an uplink signal transmitted by a second UE to obtain measurement information representing so-called UE-to-UE interference between the first UE and the second UE; and
- a generating module for generating a report including the information representing the UE-to-UE interference for transmission to the network side to enable interference-aware configuration of at least one transmission and/or interference suppression in the cellular communication system.

According to a tenth aspect there is provided an apparatus for enabling operation of a network device in connection with a cellular communication system. The apparatus comprises an input module for receiving a report including measurement information representing so-called UE-to-UE interference between a first UE and a second UE to enable interference-aware configuration of at least one transmission and/or interference suppression in the cellular communication system. The measurement information is related to at least one measurement performed by the first UE of an uplink signal transmitted by the second UE.

Other features and advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1A and FIG. 1B are schematic diagrams illustrating examples of how an uplink transmission by one UE may interfere with and affect a downlink transmission to another UE.
FIG. 2 is a schematic diagram illustrating an example of relevant parts of a wireless communication system such as a cellular communication system.
FIG. 3 is a schematic flow diagram illustrating an example of a method of operating a User Equipment, UE, in a cellular communication system according to an embodiment.
FIG. 4 is a schematic flow diagram illustrating an example of a method of operating a network device 100 in connection with a cellular communication system.
FIG. 5 is a schematic block diagram illustrating an example of a User Equipment, UE, according to an embodiment.
FIG. 6 is a schematic block diagram illustrating an example of a network device according to an embodiment.
FIG. 7 is a schematic block diagram illustrating an example of a network node according to an embodiment.
FIG. 8 is a schematic diagram illustrating an example of a computer-implementation according to an embodiment.
FIG. 9 is a schematic diagram illustrating an example of an apparatus for enabling operation of a User Equipment, UE, also referred to as a first UE, in a cellular communication system.
FIG. 10 is a schematic diagram illustrating an example of an apparatus for enabling operation of a network device in connection with a cellular communication system.

### DETAILED DESCRIPTION

Throughout the drawings, the same reference designations are used for similar or corresponding elements.

As used herein, the non-limiting terms "User Equipment", "UE" and "wireless communication device" may refer to a mobile phone, a mobile terminal or station, a cellular phone, a Personal Digital Assistant (PDA), equipped with radio communication capabilities, a smart phone, a laptop or Personal Computer (PC), equipped with an internal or external mobile broadband modem, a tablet with radio communication capabilities, a target device, a device to device UE, a machine type UE or UE capable of machine to machine communication, Customer Premises Equipment (CPE), Laptop Embedded Equipment (LEE), Laptop Mounted Equipment (LME), USB dongle, a portable electronic radio communication device, a sensor device equipped with radio communication capabilities or the like. In particular, the term "wireless communication device" should be interpreted as non-limiting terms comprising any type of wireless device communicating with a network node in a wireless communication system and/or possibly communicating directly with another wireless communication device. In other words, a wireless communication device may be any device equipped with circuitry for wireless communication according to any relevant standard for communication.

As used herein, the non-limiting term "network node" may refer to base stations, access points, network control nodes such as network controllers, radio network controllers, base station controllers, access controllers, and the like. In particular, the term "base station" may encompass different types of radio base stations including standardized base station functions such as Node Bs, or evolved Node Bs (eNBs), and also macro/micro/pico radio base stations, home base stations, also known as femto base stations, relay nodes, repeaters, radio access points, Base Transceiver Stations (BTSs), and even radio control nodes controlling one or more Remote Radio Units (RRUs), or the like.

As used herein, the term "network device" may refer to any device located in connection with a communication system, including but not limited to devices in access networks, core networks and similar network structures. The term network device may also encompass computer-based network devices in connection with a communication system, e.g. located in the cloud.

The inventors have recognized the possibility to obtain, report and/or use measurement information representing so-called UE-to-UE interference between UEs to enable interference-aware configuration of at least one transmission and/or interference suppression in the cellular communication system.

For a better understanding of the proposed technology, it may be useful to begin with a brief overview with reference to a non-limiting, but illustrative example of relevant parts of a wireless communication system.

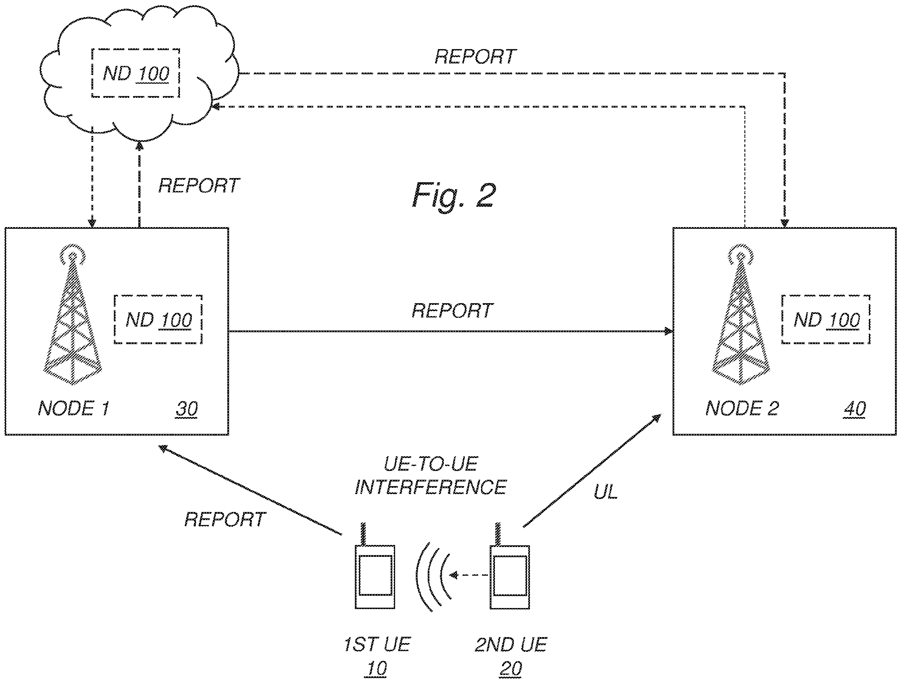

FIG. 2 is a schematic diagram illustrating an example of relevant parts of a wireless communication system such as a cellular communication system according to an embodiment.

As schematically illustrated, a first UE 10 may perform measurement(s) to obtain measurement information representing so-called UE-to-UE interference from a second UE 20. For example, the first UE 10 may report the measurement information to a first network node 30 such as a base station or similar radio network node, which is normally associated with the first UE 10. The report may also be transferred from the first network node 30 to a second network node 40 such as a base station or similar radio network node, which is normally associated with the second UE 20.

As indicated in FIG. 2, a network device, ND, 100 may be provided on the network side to enable to enable interference-aware configuration of at least one transmission and/or interference suppression based on the report and the enclosed measurement information. For example, the network device 100 may be implemented in the first network node 30 and/or the second network node 40 and/or implemented as a computer-based network device 100, e.g. located in the so-called cloud.

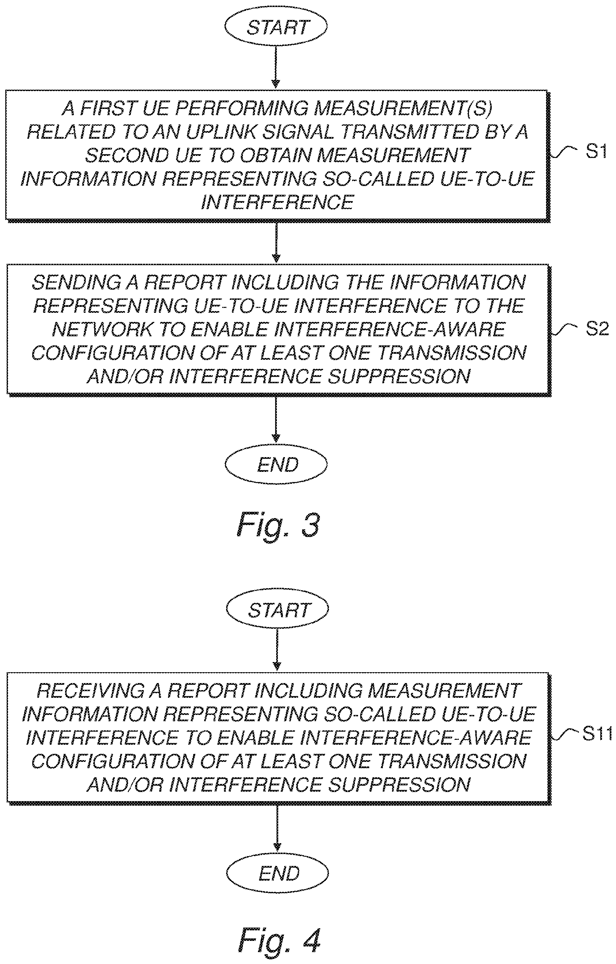

FIG. 3 is a schematic flow diagram illustrating an example of a method of operating a User Equipment, UE, in a cellular communication system according to an embodiment.

Basically the method comprises the following steps:
S1: the UE, also referred to as a first UE 10, performing at least one measurement related to an uplink signal transmitted by a second UE 20 to obtain measurement information representing so-called UE-to-UE interference between the first UE 10 and the second UE 20; and
S2: the first UE 10 sending a report including the measurement information representing the UE-to-UE interference to the network to enable interference-aware configuration of at least one transmission and/or interference suppression in the cellular communication system.

As an example, the measurement information representing the UE-to-UE interference includes information on received power of the uplink signal, and enables estimation of uplink-to-downlink, UL-to-DL, interference.

For example, the first UE determines information representing an identification of the uplink signal and includes the information representing an identification of the uplink signal in the report and/or the first UE determines information representing reception time and/or frequency of the uplink signal and includes the information representing reception time and/or frequency of the uplink signal in the report and/or the first UE determines spatial information of the uplink signal and includes the information representing spatial information of the uplink signal in the report, and/or the first UE determines capability information representing capability of suppressing interference and includes the capability information in the report and/or the first UE determines cell identity information representing to which cell the report is referring and includes the cell identity information in the report.

For example, the spatial information may indicate the estimated angle between the first and second UE and/or the estimated channel between the first and second UE.

By way of example, the uplink signal may be a random access signal, data signal, a reference signal or a synchronization signal.

For example, the uplink signal may be a random access signal such as a Physical Random Access Channel, PRACH, signal or a reference signal such as a Sounding Reference Signal, SRS, or a Demodulation Reference Signal, DMRS, or a synchronization signal such as a Primary Synchronization Signal, PSS.

In a particular example, the uplink signal is representative of a random access preamble and the report includes information representing received power of the random access preamble, information representing a random access preamble index and/or information representing reception time and/or frequency of the random access preamble.

There could be situations where the first UE would need to measure RA attempts towards more than one cell. In those cases, there may be a challenge knowing which cell the report refers to if this information is not included with or derivable from the other information elements.

In systems such as LTE, the sequences/preambles are normally unique per physical-layer cell identity, so if the sequence used is known, it is possible to determine which neighbor a sequence belongs to as long as the neighbors have different physical-layer cell identities.

However, for other systems, this kind of information may have to be added to the report, or the base station needs to share the information from the report to its known neighbors, such that the neighbors can determine if the random access attempt was made towards them. The neighbors would then initiate suitable coordination. In this case, a situation may occur that two cells receive the exact same preamble from two different UEs. If the first UE measures only one of them, there could be a conflict when informing the neighbor base stations.

For the LTE case it might not be needed at all, but for other cases or systems, it may be advisable to add information in the report to inform the network node to which cell(s) the report is referring. This could be implemented in different ways. For example, the base station could command the first UE to measure on certain (time and/or frequency) resources, where each of those is associated with an identifier that corresponds to a particular cell. Whenever the UE sends a report, the identifier is included. Another way would be to listen to the neighbors' system information, if possible, to know to which cell the uplink signal corresponds.

The report and the enclosed information may be useful for configuration of one or more transmissions in uplink and/or downlink directions, and/or for interference suppression the receiving unit(s).

More particularly, the report and the enclosed information may be useful for configuration of a downlink, DL, transmission in relation to the first UE and/or an uplink, UL, transmission in relation to the second UE.

By way of example, the configuration of at least one transmission includes scheduling transmission, link adaptation, resource allocation and/or beamforming.

In a particular example, the cellular communication system is based on Time Division Duplex, TDD.

In that case, the downlink and/or uplink resource allocation in TDD may be based on one more UE-to-UE interference measurements.

FIG. 4 is a schematic flow diagram illustrating an example of a method of operating a network device in connection with a cellular communication system.

Basically, the method comprises the step S11 of receiving a report including measurement information representing so-called UE-to-UE interference between a first UE 10 and a second UE 20 to enable interference-aware configuration of at least one transmission and/or interference suppression in the cellular communication system. The measurement information is related to at least one measurement performed by the first UE 10 of an uplink signal transmitted by the second UE 20.

By way of example, the information representing the UE-to-UE interference may include information on received power of the uplink signal and the network device may estimate uplink-to-downlink, UL-to-DL, interference at least partly based on the received power and the network device initiates interference-aware configuration of said at least one transmission and/or interference suppression at least partly based on the uplink-to-downlink, UL-to-DL, interference.

In a particular example, the network device 100 may estimate path loss between the first UE and the second UE at least partly based on the measurement information and initiate interference-aware configuration of said at least one transmission and/or interference suppression at least partly based on the estimated path loss.

Optionally, the report also includes information representing an identification of the uplink signal on which said at least one measurement is performed, and the network device 100 determines the identity of the second UE 20 based on the information identifying the uplink signal, determines the identity of the first UE 10, and initiates interference-aware configuration of said at least one transmission and/or interference suppression at least partly based on the measurement information and the identity of the first UE 10 and the identity of second UE 20.

For example, the report may also include information representing reception time and/or frequency of the uplink signal and/or spatial information of the uplink signal and/or capability information representing capability of suppressing interference and/or cell identity information representing to which cell the report is referring, and the interference-aware configuration of said at least one transmission and/or interference suppression is initiated also based on the included information.

As a choice of implementation, it is possible for the network device 100 to perform the actual interference-aware configuration of said at least one transmission.

As an example, the uplink signal may be a random access signal, a data signal, a reference signal or a synchronization signal.

In a particular example, the uplink signal is representative of a random access preamble and the report includes information representing received power of the random access preamble, information representing a random access preamble index and/or information representing reception time and/or frequency of the random access preamble.

As previously mentioned, the transmission(s) for configuration may be a downlink, DL, transmission in relation to the first UE 10, and/or an uplink, UL, transmission in relation to the second UE 20.

By way of example, the configuration of at least one transmission includes scheduling transmission, link adaptation, resource allocation and/or beamforming.

As an example, the network device 100 is included in a network node 30; 40 in the cellular communication system, e.g. as exemplified in FIG. 2.

In a particular example, the network node may be a first radio network node 30 associated with the first UE 10, and the first radio network node 30 may receive the report from the first UE 10, and/or the network node may be a second radio network node 40 associated with the second UE 20 and the second radio network node 40 receives the report from the first radio network node 30.

Information for enabling configuration of one or more transmissions and/or interference suppression may also be transferred between the first network node 30 and the second network node 40, depending on where the configuration and/or interference suppression is initiated.

Alternatively, or as a complement, the network device 100 may be a computer-based network device in connection with the cellular communication system, e.g. implemented as a cloud-based network device located in a cloud environment. In the latter case, the report may be received by the cloud-based network device, e.g. via the first network node 30 and/or further transferred to the second network node 40. The cloud-based network device 100 may also be connected to the first network node 30 and/or the second network 40 to receive and/or transfer information for performing relevant calculations if required, and/or providing information to enable configuration of one or more transmissions and/or interference suppression in the cellular communication system.

In the case of interference suppression, the interference suppression may be enabled by indicating to the first UE 10 to suppress interference from the second UE 20. This may be performed by the network device 100, in any relevant location, using indirect and/or direct communication with the first UE 10 depending on where the interference suppression is initiated, e.g. in the first network node 30, the second network node 40 or a computer-based network device located in the cloud.

In a particular example, the network device 100 also enables configuration of the first UE 10 to perform measurements on the uplink signal transmitted from the second UE 20.

For a better understanding of some aspects of the proposed technology, reference can be made to the following non-limiting examples.

In LTE, for example, when a UE wants to connect to a cell, it has to perform a random access procedure. The random access signal is sent in a contention-based manner and over the Random Access Channel (RACH), and which resources to use are specified in SIB-2 as part of the system information. The UE selects a random access preamble at random from the preambles used for contention-based access and transmits it over the PRACH. If the base station identifies the reception of a random access sequence, it will reply over the DL-SCH with a message containing the index of the sequence, its timing correction, a scheduling grant and a temporary identity (TC-RNTI). When receiving this message, the UE will respond with a terminal identification needed for further communication, which makes it possible for the UE to connect to the system.

In this particular context, during the transmission of the random access preamble as a first step of the random access procedure, UEs in the vicinity (preferably served by another cell) could attempt to identify those sequences and their corresponding power. This information could be reported to the system (e.g. the network nodes of the serving cells of the UEs) to be used for interference reduction procedures. When those UEs are to be scheduled simultaneously or close in time, the corresponding cells can take this information into account, e.g. in order to multiplex them in time or by adjusting the link adaptation accordingly, as the uplink-to-downlink interference otherwise can have a significant impact on the transmissions/receptions in relation to the interfering users.

The proposed invention allows the network to get an understanding of the uplink-to-downlink interference which can be used, e.g. for improved scheduling, link adaptation, beamforming and/or interference suppression.

By way of example, interference-aware scheduling, link adaptation, beamforming, interference suppression and so forth may be initiated or performed by one or more network nodes with respect to a first UE.

As an example, the first UE may obtain information related to at least one sequence transmitted by a second UE by receiving an uplink signal, for example RACH, SRS, DM-RS. For example, the received power can be estimated over resources transmitted by the second UE. The first UE reports to the network the measurement(s) it has performed. The network may then associate the sequence with a UE identity and for example estimate the pathloss between the first UE and the second UE. The network may then control or coordinate, or otherwise configure the scheduling, link adaptation, beamforming, interference suppression or similar procedure. For example, the network side may control the scheduling and/or link adaption of downlink transmissions to the first UE simultaneous with uplink transmissions from the second UE.

For example, the information obtained by the first UE may include a random access preamble index and received power.

With reference to FIG. 1A and B, it can for example be assumed, for simplicity, that UE1 is already connected to BS1 and that UE2 is about to transmit a random access preamble to BS2. Assume that both UE1 and BS2 receive this preamble successfully and manage to identify the index of the preamble.

In this particular simplified example, UE1 may estimate the received power of the preamble, and report the index of the preamble and its received power to BS1, which "forwards" the report to BS2. From this, BS2 can identify that BS1 is referring to UE2 and estimate the pathloss between UE1 and UE2. For example, the pathloss may be estimated to be, say 60dB (depends on what power UE2 used for the initial random access preamble transmission).

This information may then be shared with BS1 and especially when uplink transmissions by UE2 are scheduled, the BS1 is informed such that it can estimate the interference contribution from UE2 to UE1. In the same manner, when uplink transmissions by UE1 are scheduled, BS2 is informed such that it can estimate the interference contribution from UE1 to UE2.

During transmissions from BS2/BS1 to UE2/UE1, BS1/BS2 can use the estimated interference contribution, e.g. to adjust the scheduling, link adaptation, beamforming and/or interference suppression accordingly.

The proposed technology may thus be based on the estimation of interference between UEs, e.g. by using uplink signaling that is known to the network such as RACH and SRS and so forth.

As mentioned, an example of a suitable information element of the measurement of another UEs uplink signal is the received power. This gives some information about the interference level as well as distance. In case of RA-preamble transmission, the power setting may be based on a path-loss estimation of the (downlink) CRS of the primary cell. When the UE reports the received power to the network, the information should preferably be combined with the corresponding power estimation at the base station receiving the RA-signal. From that, it is possible to deduce the difference in path-loss (UE1 -> BS1 vs UE1 -> UE2) which together with the path-loss between UE1 and BS1 gives the path-loss between UE1 and UE2. Note that the received power report should preferably also contain which signal/preamble index that was found and/or at which time instance and/or frequency it was received in order to facilitate the mapping between uplink signal transmission and UE. This may be advantageous in case of several simultaneous RACH-transmissions, to make it easier to deduce to which UE(s) the power report(s) corresponds.

In some cases, the uplink signal transmissions such as transmission of RA-preamble, PSS, SRS, DM-RS, and so forth may be done periodically, for example when a UE wants to go from RRC_IDLE to RRC_CONNECTED. The resources used for transmission is then based on the information in SIB2, which means that the information from the SIB2 is enough for UEs in neighboring cells to know when to measure for possible uplink signals.

In other cases, these transmissions, and thus measurements by other UEs, could be done in a more dynamic matter. For example, an eNB or similar node could order a UE to perform uplink synchronization, telling the UE to perform a RA procedure. In the cases where the RA is done on a contention free resource, this should preferably be informed to the UEs that should measure. This type of signal could be used solely for the purpose of measuring from other nearby UEs. With an extension of the standard, the UEs could instead be dynamically ordered to transmit such signal, for example a PSS/SSS (which is used by eNB to be found by UEs), in order to simplify the procedure of be found by other UEs.

Once a UE has conducted measurements, e.g. on the PRACH signal from another user, the network will receive a report. This report will contain information on the strength of the measured signal and optionally an identification sequence related to the measured signal.

As previously indicated, the network can also configure a user to listen, e.g. to PRACH signals, which can belong to other cells. This will enable a user belonging to one cell to listen to PRACH signals from other users, which are trying to connect via random access to a neighbouring cell.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

According to another aspect, there is also provided a User Equipment, UE, 10 configured for operation in a cellular communication system. The UE, also referred to as a first UE 10, is configured to perform at least one measurement related to an uplink signal transmitted by a second UE 20 to obtain measurement information representing so-called UE-to-UE interference between the first UE 10 and the second UE 20. The first UE 10 is also configured to send a report including the measurement information representing the UE-to-UE interference to the network to enable interference-aware configuration of at least one transmission and/or interference suppression in the cellular communication system.

By way of example, the first UE 10 may be configured to include information on received power of the uplink signal in the measurement information representing the UE-to-UE interference, and the first UE 10 may be configured to determine information representing an identification of the uplink signal and include the information representing an identification of the uplink signal in the report and/or the first UE 10 may be configured to determine information representing reception time and/or frequency of the uplink signal and include the information representing reception time and/or frequency of the uplink signal in the report and/or the first UE 10 may be configured to determine spatial information of the uplink signal and include the information representing spatial information of the uplink signal in the report, and/or the first UE 10 may be configured to determine capability information representing capability of suppressing interference, and include the capability information in the report and/or the first UE 10 may be configured to determine cell identity information representing to which cell the report is referring and include the cell identity information in the report.

For example, the first UE 10 may be configured to perform said at least one measurement related to a random access signal, a data signal, a reference signal or a synchronization signal.

In a particular example, the first UE 10 is configured to perform said at least one measurement related to a random access preamble and to include into the report information representing received power of the random access preamble, information representing a random access preamble index and/or information representing reception time and/or frequency of the random access preamble.

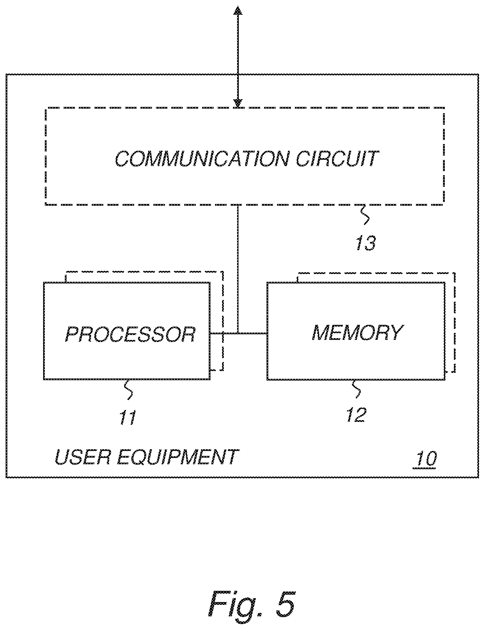

FIG. 5 is a schematic block diagram illustrating an example of a User Equipment, UE, according to an embodiment. In this particular example, the UE 10 comprises a processor 11 and a memory 12, the memory 12 comprising instructions executable by the processor 11, whereby the processor is operative to initiate at least one measurement to obtain measurement information representing so-called UE-to-UE interference and to generate a corresponding report for transmission to the network side.

Optionally, the UE 10 may also include a communication circuit 13. The communication circuit 13 may include functions for wired and/or wireless communication with other devices and/or network nodes in the network. In a particular example, the communication circuit 13 may be based on radio circuitry for communication with one or more other nodes, including transmitting and/or receiving information. The communication circuit 13 may be interconnected to the processor 11 and/or memory 12. By way of example, the communication circuit 13 may include any of the following: a receiver, a transmitter, a transceiver, input/output (I/O) circuitry, input port(s) and/or output port(s).

It is also possible to provide a solution based on a combination of hardware and software. The actual hardware-software partitioning can be decided by a system designer based on a number of factors including processing speed, cost of implementation and other requirements.

According to yet another aspect, there is provided a network device 100 configured for operation in connection with a cellular communication system. The network device 100 is configured to receive a report including measurement information representing so-called UE-to-UE interference between a first UE 10 and a second UE 20 to enable interference-aware configuration of at least one transmission and/or interference suppression in the cellular communication system. The measurement information is related to at least one measurement performed by the first UE 10 of an uplink signal transmitted by the second UE 20.

By way of example, the network device 100 may be configured to receive a report including measurement information on received power of the uplink signal to enable estimation of uplink-to-downlink, UL-to-DL, interference.

Optionally, the network device 100 is configured to initiate interference-aware configuration of said at least one transmission and/or interference suppression at least partly based on the measurement information representing so-called UE-to-UE interference included in the report.

In a particular example, the network device 100 may be configured to estimate path loss between the first UE 10 and the second UE 20 at least partly based on the measurement information and initiate interference-aware configuration of said at least one transmission and/or interference suppression at least partly based on the estimated path loss.

For example, the network device 100 may be configured to receive information representing an identification of the uplink signal on which said at least one measurement is performed, and to determine the identity of the second UE 20 based on the information identifying the uplink signal, and to determine the identity of the first UE 10, and to initiate interference-aware configuration of said at least one transmission and/or interference suppression at least partly based on the measurement information and the identity of the first UE 10 and the identity of second UE 20.

Optionally, the network device 100 is also configured to receive information representing reception time and/or frequency of the uplink signal and/or spatial information of the uplink signal and/or capability information representing capability of suppressing interference and/or cell identity information representing to which cell the report is referring, and to initiate the interference-aware configuration of said at least one transmission and/or interference suppression based on the received information.

If desirable, depending on the particular implementation and the location of the network device, the network device 100 may be configured to perform the actual interference-aware configuration of said at least one transmission.

In a particular example, the network device 100 is configured to receive a report including measurement information related to a random access preamble and the report includes information representing received power of the random access preamble, information representing a random access preamble index and/or information representing reception time and/or frequency of the random access preamble.

Optionally, the network device 100 may be configured to enable interference suppression by indicating to the first UE 10 to suppress interference from the second UE 20.

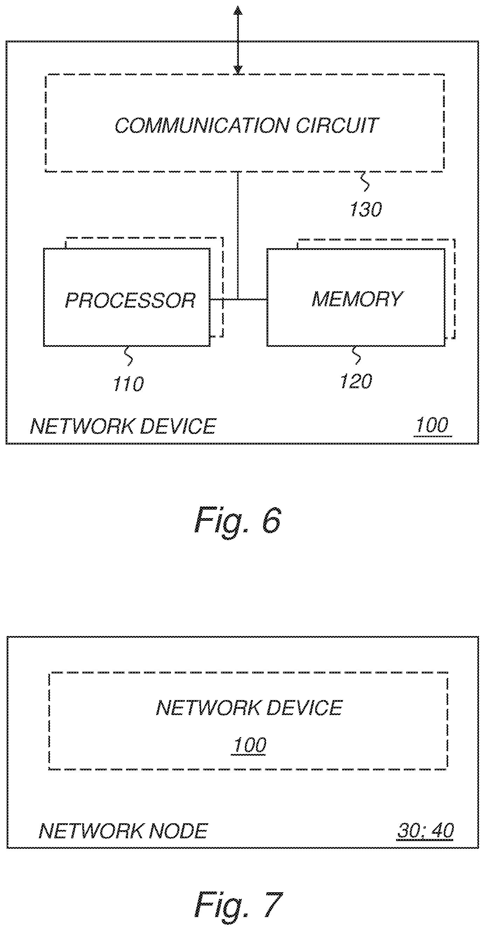

FIG. 6 is a schematic block diagram illustrating an example of a network device according to an embodiment. In this particular example, the network device 100 comprises a processor 110 and a memory 120, the memory 120 comprising instructions executable by the processor 110, whereby the processor is operative to receive a report including measurement information representing so-called UE-to-UE interference to enable interference-aware configuration of at least one transmission and/or interference suppression in the cellular communication system.

Optionally, the network device 100 may also include a communication circuit 130. The communication circuit 130 may include functions for wired and/or wireless communication with other devices and/or network nodes in the network. In a particular example, the communication circuit 130 may be based on radio circuitry for communication with one or more other nodes, including transmitting and/or receiving information. The communication circuit 130 may be interconnected to the processor 110 and/or memory 120. By wayof example, the communication circuit 13 may include any of the following: a receiver, a transmitter, a transceiver, input/output (I/O) circuitry, input port(s) and/or output port(s).

It is also possible to provide a solution based on a combination of hardware and software. The actual hardware-software partitioning can be decided by a system designer based on a number of factors including processing speed, cost of implementation and other requirements.

For example, the network device 100 may be included in a network node 30; 40 in the cellular communication system or the network device 100 may be a computer-based network device in connection with the cellular communication system, e.g. located in the cloud.

FIG. 7 is a schematic block diagram illustrating an example of a network node according to an embodiment.

According to an aspect, there is thus also provided a network node 30; 40 comprising a network device 100 as described herein.

In a particular example, the network node is a first radio network node 30 associated with the first UE 10, and the first radio network node 30 is configured to receive the report from the first UE 10, or the network node is a second radio network node 40 associated with the second UE 20 and the second radio network node 40 is configured to receive the report from the first radio network node 30.

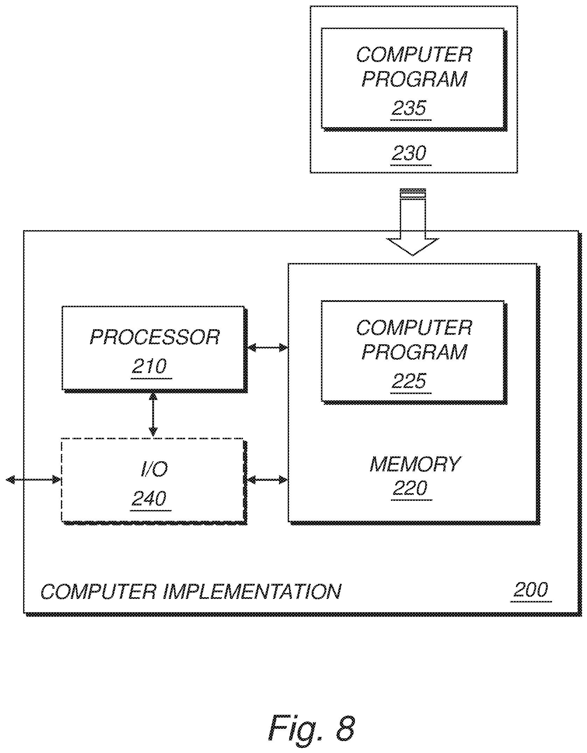

FIG. 8 is a schematic diagram illustrating an example of a computer-implementation according to an embodiment. In this particular example, at least some of the steps, functions, procedures, modules and/or blocks described herein are implemented in a computer program 225; 235, which is loaded into the memory 220 for execution by processing circuitry including one or more processors 210. The processor(s) 210 and memory 220 are interconnected to each other to enable normal software execution. An optional input/output device 240 may also be interconnected to the processor(s) 210 and/or the memory 220 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 210 is thus configured to perform, when executing the computer program 225, well-defined processing tasks such as those described herein.

The processing circuitry does not have to be dedicated to only execute the above-described steps, functions, procedure and/or blocks, but may also execute other tasks.

In a particular embodiment, there is provided a computer program 225; 235 for enabling, when executed, operation of a User Equipment, UE, also referred to as a first UE 10, in a cellular communication system. The computer program 225; 235 comprises instructions, which when executed by at least one processor 210, cause the at least one processor 210 to:
- initiate at least one measurement related to an uplink signal transmitted by a second UE 20 to obtain measurement information representing so-called UE-to-UE interference between the first UE 10 and the second UE 20; and
- generate a report including the measurement information representing the UE-to-UE interference for transmission to the network side to enable interference-aware configuration of at least one transmission and/or interference suppression in the cellular communication system.

In another particular embodiment, there is provided a computer program 225; 235 for enabling, when executed, operation of a network device in connection with a cellular communication system. The computer program 225; 235 comprises instructions, which when executed by at least one processor 210, cause the at least one processor 210 to receive a report including measurement information representing so-called UE-to-UE interference between a first UE 10 and a second UE 20 to enable interference-aware configuration of at least one transmission and/or interference suppression in the cellular communication system, wherein the measurement information is related to at least one measurement performed by the first UE 10 of an uplink signal transmitted by the second UE 20.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

There is thus provided a computer-program product comprising a computer-readable medium 220; 230 having stored thereon such a computer program 225; 235.

By way of example, the software or computer program 225; 235 may be realized as a computer program product, which is normally carried or stored on a computer-readable medium 220; 230, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

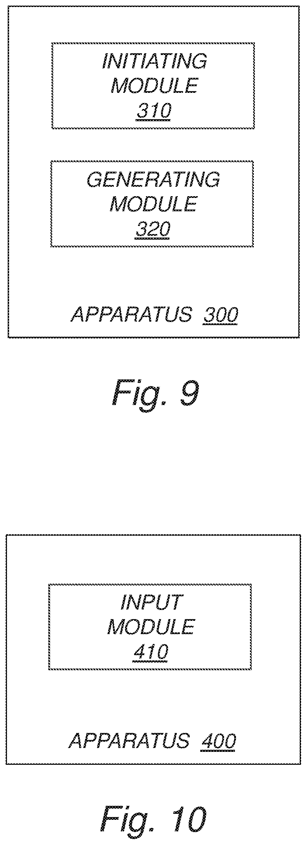

FIG. 9 is a schematic diagram illustrating an example of an apparatus for enabling operation of a User Equipment, UE, also referred to as a first UE, in a cellular communication system. The apparatus 300 comprises:
- an initiating module 310 for initiating at least one measurement related to an uplink signal transmitted by a second UE 20 to obtain measurement information representing so-called UE-to-UE interference between the first UE 10 and the second UE 20; and
- a generating module 320 for generating a report including the measurement information representing the UE-to-UE interference for transmission to the network side to enable interference-aware configuration of at least one transmission and/or interference suppression in the cellular communication system.

FIG. 10 is a schematic diagram illustrating an example of an apparatus for enabling operation of a network device in connection with a cellular communication system. The apparatus 400 comprises an input module 410 for receiving a report including measurement information representing so-called UE-to-UE interference between a first UE 10 and a second UE 20 to enable interference-aware configuration of at least one transmission and/or interference suppression in the cellular communication system. The measurement information is related to at least one measurement performed by the first UE 10 of an uplink signal transmitted by the second UE 20.

Alternatively it is possible to realize the module(s) in FIG. 9 and FIG. 10 predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

It is becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:
- Consolidation of network functionality into virtualized software running on customized or generic hardware. This is sometimes referred to as network function virtualization.
- Co-location of one or more application stacks, including operating system, running on separate hardware onto a single hardware platform. This is sometimes referred to as system virtualization, or platform virtualization.
- Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centers, in other scenarios it may in fact be beneficial to distribute functionality over different parts of the network.

A Network Device (ND) may generally be seen as an electronic device being communicatively connected to other electronic devices in the network.

By way of example, the network device may be implemented in hardware, software or a combination thereof. For example, the network device may be a special-purpose network device or a general purpose network device, or a hybrid thereof.

A special-purpose network device may use custom processing circuits and a proprietary operating system (OS), for execution of software to provide one or more of the features or functions disclosed herein.

A general purpose network device may use common off-the-shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a wireless network interface controller (WNIC) or through plugging in a cable to a physical port connected to a network interface controller (NIC). During operation, the software may be executed by the hardware to instantiate a set of one or more software instance(s). Each of the software instance(s), and that part of the hardware that executes that software instance, may form a separate virtual network element.

By way of another example, a general purpose network device may for example include hardware comprising a set of one or more processor(s), often COTS processors, and network interface controller(s) (NICs), as well as non-transitory machine readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space). These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) may perform similar functionality compared to Virtual Network Element(s) (VNEs). This virtualization of the hardware is sometimes referred to as Network Function Virtualization (NFV)). Thus, NFV may be used to consolidate many network equipment types onto industry standard high volume server hardware, physical switches, and physical storage, which could be located in data centers, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a network device ND. In certain embodiments of such a hybrid network device, a platform Virtual Machine (VM), such as a VM that implements functionality of a special-purpose network device, could provide for para-virtualization to the hardware present in the hybrid network device.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. A method of operating a network device (100) in connection with a cellular communication system, wherein the method comprises:
- receiving (S11) a report including measurement information representing so-called UE-to-UE interference between a first UE (10) and a second UE (20) to enable interference-aware configuration of at least one transmission and/or interference suppression in the cellular communication system, wherein the measurement information is related to at least one measurement performed by the first UE (10) of an uplink signal transmitted by the second UE (20);
- estimating path loss between the first UE and the second UE at least partly based on the measurement information; and
- initiating interference-aware configuration of said at least one transmission and/or interference suppression at least partly based on the estimated path loss.

2. The method of claim 1, wherein the information representing the UE-to-UE interference includes information on received power of the uplink signal and the network device estimates uplink-to-downlink, UL-to-DL, interference at least partly based on the received power and the network device initiates interference-aware configuration of said at least one transmission and/or interference suppression at least partly based on the uplink-to-downlink, UL-to-DL, interference.

3. The method of claim 1 or 2, wherein the report also includes information representing an identification of the uplink signal on which said at least one measurement is performed, and wherein the network device (100) determines the identity of the second UE (20) based on the information identifying the uplink signal, determines the identity of the first UE (10), and initiates interference-aware configuration of said at least one transmission and/or interference suppression at least partly based on the measurement information and the identity of the first UE (10) and the identity of second UE (20).

4. The method of claim 3, wherein the report also includes information representing reception time and/or frequency of the uplink signal and/or spatial information of the uplink signal and/or capability information representing capability of suppressing interference and/or cell identity information representing to which cell the report is referring, and the interference-aware configuration of said at least one transmission and/or interference suppression is initiated also based on the included information.

5. A network device (100) configured for operation in connection with a cellular communication system, wherein the network device (100) is configured to receive a report including measurement information representing so-called UE-to-UE interference between a first UE (10) and a second UE (20) to enable interference-aware configuration of at least one transmission and/or interference suppression in the cellular communication system, wherein the measurement information is related to at least one measurement performed by the first UE (10) of an uplink signal transmitted by the second UE (20),
wherein the network device (100) is configured to estimate path loss between the first UE (10) and the second UE (20) at least partly based on the measurement information and initiate interference-aware configuration of said at least one transmission and/or interference suppression at least partly based on the estimated path loss.

6. The network device of claim 5, wherein the network device (100) is configured to receive a report including measurement information on received power of the uplink signal to enable estimation of uplink-to-downlink, UL-to-DL, interference.

7. The network device of claim 5 or 6, wherein the network device (100) is configured to initiate interference-aware configuration of said at least one transmission and/or interference suppression at least partly based on the measurement information representing so-called UE-to-UE interference included in the report.

8. The network device of any of the claims 5 to 7, wherein the network device (100) is configured to receive information representing an identification of the uplink signal on which said at least one measurement is performed, and to determine the identity of the second UE (20) based on the information identifying the uplink signal, and to determine the identity of the first UE (10), and to initiate interference-aware configuration of said at least one transmission and/or interference suppression at least partly based on the measurement information and the identity of the first UE (10) and the identity of second UE (20).

9. The network device of claim 8, wherein the network device (100) is configured to receive information representing reception time and/or frequency of the uplink signal and/or spatial information of the uplink signal and/or capability information representing capability of suppressing interference and/or cell identity information representing to which cell the report is referring, and to initiate the interference-aware configuration of said at least one transmission and/or interference suppression based on the received information.

## Patentansprüche

1. Verfahren zum Betreiben einer Netzwerkvorrichtung (100) in Verbindung mit einem zellularen Kommunikationssystem, wobei das Verfahren umfasst:
- Empfangen (S11) eines Berichts, enthaltend Messinformationen, die so genannte UE-zu-UE-Interferenzen zwischen einer ersten UE (10) und einer zweiten UE (20) repräsentieren, um interferenzbewusste Konfiguration mindestens einer Übertragung und/oder Interferenzunterdrückung in dem zellularen Kommunikationssystem zu ermöglichen, wobei die Messinformationen zu mindestens einer Messung, durchgeführt durch die erste UE (10), eines durch die zweite UE (20) übertragenen Aufwärtsstreckensignals in Beziehung stehen;
- Schätzen von Wegverlust zwischen der ersten UE und der zweiten UE mindestens teilweise basierend auf den Messinformationen; und
- Einleiten einer interferenzbewussten Konfiguration der mindestens einen Übertragung und/oder Interferenzunterdrückung mindestens teilweise basierend auf dem geschätzten Wegverlust.

2. Verfahren nach Anspruch 1, wobei die Informationen, die die UE-zu-UE-Interferenzen repräsentieren, Informationen über eine Empfangsleistung des Aufwärtsstreckensignals enthalten und die Netzwerkvorrichtung eine Aufwärtsstrecken-zu-Abwärtsstrecken- bzw. UL-zu-DL-Interferenzen mindestens teilweise basierend auf der Empfangsleistung schätzt und die Netzwerkvorrichtung eine interferenzbewusste Konfiguration der mindestens einen Übertragung und/oder Interferenzunterdrückung mindestens teilweise basierend auf der Aufwärtsstrecken-zu-Abwärtsstrecken- bzw. UL-zu-DL-Interferenzen einleitet.

3. Verfahren nach Anspruch 1 oder 2, wobei der Bericht außerdem Informationen enthält, die eine Identifikation der Aufwärtsstreckensignals repräsentieren, auf dem die mindestens eine Messung durchgeführt wird, und wobei die Netzwerkvorrichtung (100) die Identität der zweiten UE (20) basierend auf den Informationen, die das Aufwärtsstreckensignal identifizieren, bestimmt, die Identität der ersten UE (10) bestimmt und eine interferenzbewusste Konfiguration der mindestens einen Übertragung und/oder Interferenzunterdrückung mindestens teilweise basierend auf den Messinformationen und der Identität der ersten UE (10) und der Identität der zweiten UE (20) einleitet.

4. Verfahren nach Anspruch 3, wobei der Bericht außerdem Informationen enthält, die eine Empfangszeit und/oder -frequenz des Aufwärtsstreckensignals und/oder räumliche Informationen des Aufwärtsstreckensignals und/oder Fähigkeitsinformationen, die eine Fähigkeit zum Unterdrücken von Interferenzen repräsentieren, und/oder Zellidentitätsinformationen, die repräsentieren, auf welche Zelle sich der Bericht bezieht, repräsentieren und die interferenzbewusste Konfiguration der mindestens einen Übertragung und/oder Interferenzunterdrückung außerdem basierend auf den enthaltenen Informationen eingeleitet wird.

5. Netzwerkvorrichtung (100), konfiguriert für Betrieb in Verbindung mit einem zellularen Kommunikationssystem, wobei die Netzwerkvorrichtung (100) konfiguriert ist zum Empfangen eines Berichts, enthaltend Messinformationen, die so genannte UE-zu-UE-Interferenzen zwischen einer ersten UE (10) und einer zweiten UE (20) repräsentieren, um interferenzbewusste Konfiguration mindestens einer Übertragung und/oder Interferenzunterdrückung in dem zellularen Kommunikationssystem zu ermöglichen, wobei die Messinformationen zu mindestens einer Messung, durchgeführt durch die erste UE (10), eines durch die zweite UE (20) übertragenen Aufwärtsstreckensignals in Beziehung stehen,
wobei die Netzwerkvorrichtung (100) konfiguriert ist zum Schätzen von Wegverlust zwischen der ersten UE (10) und der zweiten UE (20) mindestens teilweise basierend auf den Messinformationen und zum Einleiten einer interferenzbewussten Konfiguration der mindestens einen Übertragung und/oder Interferenzunterdrückung mindestens teilweise basierend auf dem geschätzten Wegverlust.

6. Netzwerkvorrichtung nach Anspruch 5, wobei die Netzwerkvorrichtung (100) konfiguriert ist zum Empfangen, eines Berichts, enthaltend Messinformationen über Empfangsleistung des Aufwärtsstreckensignals, um eine Schätzung von Aufwärtsstrecken-zu-Abwärtsstrecken- bzw. UL-zu-DL-Interferenzen zu ermöglichen.

7. Netzwerkvorrichtung nach Anspruch 5 oder 6, wobei die Netzwerkvorrichtung (100) konfiguriert ist zum Einleiten einer interferenzbewussten Konfiguration der mindestens einen Übertragung und/oder Interferenzunterdrückung mindestens teilweise basierend auf den in dem Bericht enthaltenen Messinformationen, die so genannte UE-zu-UE-Interferenzen repräsentieren.

8. Netzwerkvorrichtung nach einem der Ansprüche 5 bis 7, wobei die Netzwerkvorrichtung (100) konfiguriert ist zum Empfangen von Informationen, die eine Identifikation des Aufwärtsstreckensignals repräsentieren, auf dem mindestens eine Messung durchgeführt wird, und zum Bestimmen der Identität der zweiten UE (20) basierend auf den Informationen, die das Aufwärtsstreckensignal identifizieren, und zum Bestimmen der Identität der ersten UE (10) und zum Einleiten einer interferenzbewussten Konfiguration der mindestens einen Übertragung und/oder Interferenzunterdrückung mindestens teilweise basierend auf den Messinformationen und der Identität der ersten UE (10) und der Identität der zweiten UE (20).

9. Netzwerkvorrichtung nach Anspruch 8, wobei die Netzwerkvorrichtung (100) konfiguriert ist zum Empfangen von Informationen, die eine Empfangszeit und/oder -frequenz des Aufwärtsstreckensignals und/oder räumliche Informationen des Aufwärtsstreckensignals und/oder Fähigkeitsinformationen, die eine Fähigkeit zum Unterdrücken von Interferenzen repräsentieren, und/oder Zellidentitätsinformationen, die repräsentieren, auf welche Zelle sich der Bericht bezieht, repräsentieren, und/oder zum Einleiten der interferenzbewussten Konfiguration der mindestens einen Übertragung und/oder Interferenzunterdrückung basierend auf den empfangenen Informationen.

## Revendications

1. Procédé de fonctionnement d'un dispositif de réseau (100) en connexion avec un système de communication cellulaire, dans lequel le procédé comprend :
- la réception (S11) d'un rapport qui inclut une information de mesure qui représente ce que l'on appelle l'interférence UE-à-UE entre un premier UE (10) et un second UE (20) de manière à permettre une configuration tenant compte de l'interférence d'au moins une émission et/ou la suppression de l'interférence dans le système de communication cellulaire, dans lequel l'information de mesure est rapportée à au moins une mesure qui est effectuée par le premier UE (10) d'un signal de liaison montante qui est émis par le second UE (20) ;
- l'estimation d'un affaiblissement de propagation entre le premier UE et le second UE au moins partiellement sur la base de l'information de mesure ; et
- l'initiation d'une configuration tenant compte de l'interférence de ladite au moins une émission et/ou de la suppression de l'interférence au moins partiellement sur la base de l'affaiblissement de propagation estimé.

2. Procédé selon la revendication 1, dans lequel l'information qui représente l'interférence UE-à-UE inclut une information qui concerne une puissance reçue du signal de liaison montante, et le dispositif de réseau estime l'interférence liaison montante-à-liaison descendante, UL-à-DL, au moins partiellement sur la base de la puissance reçue, et le dispositif de réseau initie une configuration tenant compte de l'interférence de ladite au moins une émission et/ou la suppression de l'interférence au moins partiellement sur la base de l'interférence liaison montante-à-liaison descendante, UL-à-DL.

3. Procédé selon la revendication 1 ou 2, dans lequel le rapport inclut également une information qui représente une identification du signal de liaison montante sur lequel ladite au moins une mesure est effectuée, et dans lequel le dispositif de réseau (100) détermine l'identité du second UE (20) sur la base de l'information qui identifie le signal de liaison montante, détermine l'identité du premier UE (10) et initie une configuration tenant compte de l'interférence de ladite au moins une émission et/ou la suppression de l'interférence au moins partiellement sur la base de l'information de mesure ainsi que sur la base de l'identité du premier UE (10) et de l'identité du second UE (20).

4. Procédé selon la revendication 3, dans lequel le rapport inclut également une information qui représente un temps et/ou une fréquence de réception du signal de liaison montante et/ou une information spatiale du signal de liaison montante et/ou une information de capacité qui représente la capacité de supprimer l'interférence et/ou une information d'identité de cellule qui représente à quelle cellule le rapport fait référence, et la configuration tenant compte de l'interférence de ladite au moins une émission et/ou la suppression de l'interférence sont/est initiée(s) également sur la base de l'information incluse.

5. Dispositif de réseau (100) configuré pour un fonctionnement en connexion avec un système de communication cellulaire, dans lequel le dispositif de réseau (100) est configuré de manière à ce qu'il reçoive un rapport qui inclut une information de mesure qui représente ce que l'on appelle l'interférence UE-à-UE entre un premier UE (10) et un second UE (20) de manière à permettre une configuration tenant compte de l'interférence d'au moins une émission et/ou la suppression de l'interférence dans le système de communication cellulaire, dans lequel l'information de mesure est rapportée à au moins une mesure qui est effectuée par le premier UE (10) d'un signal de liaison montante qui est émis par le second UE (20) ; dans lequel :
le dispositif de réseau (100) est configuré de manière à ce qu'il estime un affaiblissement de propagation entre le premier UE (10) et le second UE (20) au moins partiellement sur la base de l'information de mesure et de manière à ce qu'il initie une configuration tenant compte de l'interférence de ladite au moins une émission et/ou la suppression de l'interférence au moins partiellement sur la base de l'affaiblissement de propagation estimé.

6. Dispositif de réseau selon la revendication 5, dans lequel le dispositif de réseau (100) est configuré de manière à ce qu'il reçoive un rapport qui inclut une information de mesure qui concerne une puissance reçue du signal de liaison montante de manière à permettre une estimation de l'interférence liaison montante-à-liaison descendante, UL-à-DL.

7. Dispositif selon la revendication 5 ou 6, dans lequel le dispositif de réseau (100) est configuré de manière à ce qu'il initie une configuration tenant compte de l'interférence de ladite au moins une émission et/ou la suppression de l'interférence au moins partiellement sur la base de l'information de mesure qui représente ce que l'on appelle l'interférence UE-à-UE et qui est incluse dans le rapport.

8. Dispositif de réseau selon l'une quelconque des revendications 5 à 7, dans lequel le dispositif de réseau (100) est configuré de manière à ce qu'il reçoive une information qui représente une identification du signal de liaison montante sur lequel ladite au moins une mesure est effectuée, et de manière à ce qu'il détermine l'identité du second UE (20) sur la base de l'information qui identifie le signal de liaison montante, et de manière à ce qu'il détermine l'identité du premier UE (10), et de manière à ce qu'il initie une configuration tenant compte de l'interférence de ladite au moins une émission et/ou la suppression de l'interférence au moins partiellement sur la base de l'information de mesure ainsi que sur la base de l'identité du premier UE (10) et de l'identité du second UE (20).

9. Dispositif de réseau selon la revendication 8, dans lequel le dispositif de réseau (100) est configuré de manière à ce qu'il reçoive une information qui représente un temps et/ou une fréquence de réception du signal de liaison montante et/ou une information spatiale du signal de liaison montante et/ou une information de capacité qui représente la capacité de supprimer l'interférence et/ou une information d'identité de cellule qui représente à quelle cellule le rapport fait référence, et de manière à ce qu'il initie la configuration tenant compte de l'interférence de ladite au moins une émission et/ou la suppression de l'interférence sur la base de l'information reçue.
